# EUROPÄISCHE PATENTSCHRIFT

(11) **EP 3 094 421 B1**
(45) Veröffentlichungstag und Bekanntmachung des Hinweises auf die Patenterteilung: **02.03.2022**
(21) Anmeldenummer: 15700177.7
(22) Anmeldetag: 14.01.2015
(51) Int. Cl.: B05B 13/04, B25J 5/02

(54) **SCHUTZSCHILDVORRICHTUNG FÜR EINE VERFAHRSCHIENE**
PROTECTIVE SHIELD FOR A RAIL
BOUCLIER PROTECTEUR POUR A GLISSIÈRE

(30) Priorität: 16.01.2014 DE 102014000478
(43) Veröffentlichungstag der Anmeldung: 23.11.2016
(73) Patentinhaber: Dürr Systems AG, 74321 Bietigheim-Bissingen (DE)
(72) Erfinder: HAAS, Jürgen, 75438 Knittlingen (DE); ALONSO, Gerhard, 74357 Bönnigheim (DE); HANNIG, Detlev, 73650 Winterbach (DE); HERRE, Frank, 71739 Oberriexingen (DE); KRIEGER, Roland, 74321 Bietigheim-Bissingen (DE); DONNER, Joachim, 71638 Ludwigsburg (DE)
(74) Vertreter: v. Bezold & Partner Patentanwälte - PartG mbB
(86) Internationale Anmeldenummer: PCT/EP2015/000059
(87) Internationale Veröffentlichungsnummer: WO 2015/106965

(56) Entgegenhaltungen:
- CN-U- 203 343 793
- DE-A1- 1 805 145
- DE-A1-102004 040 161
- DE-A1-102004 056 285
- DE-A1-102012 211 135
- KR-A- 20130 000 265

## Beschreibung

Die Erfindung betrifft eine Schutzschildvorrichtung für eine Verfahrschiene (Verfahrachse), entlang der zumindest ein Roboter mit einem Applikationsorgan verfahrbar ist. Die Schutzschildvorrichtung findet insbesondere Anwendung in einer Lackieranlage, vor allem zur Lackierung von Kraftfahrzeugkarosserien und/oder Anbauteilen hierfür.

CN 203 343 793 U offenbart ein Traggestell mit einem oberen Tragbalken, an dem ein Roboter mit Motor verfahrbar montiert ist. Aus der EP 0 192 338 A1 ist eine Lackieranlage mit einer Verfahrschiene bekannt, entlang der ein Roboter mit einem Applikationsorgan verfahrbar ist. Insbesondere dann, wenn das Applikationsorgan ein Zerstäuber zur Applikation von Lack ist, besteht die Gefahr, dass die Verfahrschiene durch den versprühten Lack verschmutzt wird. Der Lack kann hierbei quasi direkt von dem Zerstäuber auf die Verfahrschiene gelangen. Ebenso kann der Lack quasi indirekt als Overspray auf die Verfahrschiene gelangen. Als Overspray bezeichnet man den Anteil des versprühten Lacks, der nicht auf das zu lackierende Werkstück gelangt und meist mittels eines Frischluftstroms aus der Lackierkabine befördert wird.

Eine verschmutzte Verfahrschiene ist zu reinigen, was üblicherweise manuell erfolgt. Das Reinigen ist einerseits aufwändig und kann andererseits nur während eines Stillstands des Roboters oder allgemein der Lackieranlage durchgeführt werden.

Aus der DE 1 805 145 A ist eine Einrichtung mit einer Spritzpistole bekannt, wobei Hubständer-Führungsschienen ganzheitlich mit Balgen ummantelt sind. Die Balge sind an einem Längsende ortsfest montiert, um ziehharmonikaförmig auseinandergezogen und zusammengedrückt werden zu können. Die Balge sind stark verschmutzungsanfällig. Insbesondere neigen die Falten oder Ritze zur Ansammlung von Schmutz. Die Balge sind aufwändig zu reinigen und ebenfalls nur während eines Stillstands der Spritzanlage. Ferner besteht bei den Balgen die Gefahr des Verklebens und die Gefahr, dass getrockneter Schmutz wieder abfallen oder abbröckeln kann. Zum allgemeinen technologischen Hintergrund kann noch die US 2 728 238 A, die GB 2 263422 A, die DE 39 11 454 A1 und die CH 399 348 A genannt werden.

Eine Aufgabe der Erfindung ist es, eine Möglichkeit zu schaffen, mittels der Reinigungsintervalle für Verfahrschienen, an denen zumindest ein Roboter mit einem Applikationsorgan verfahrbar ist, zumindest verlängerbar sind, vorzugsweise das Reinigungserfordernis nahezu gänzlich beseitigt werden kann.

Diese Aufgabe wird mit den Merkmalen des unabhängigen Anspruchs gelöst. Vorteilhafte Weiterbildungen der Erfindung ergeben sich aus den Unteransprüchen und der folgenden Beschreibung bevorzugter Ausführungsformen der Erfindung.

Die Erfindung betrifft die allgemeine technische Lehre einer Schutzschildvorrichtung für eine Verfahrschiene (Verfahrachse), entlang der zumindest ein Roboter mit einem Applikationsorgan verfahrbar ist. Die Schutzschildvorrichtung zeichnet sich vor allem dadurch aus, dass sie entlang der Verfahrschiene verfahrbar, insbesondere translatorisch beweglich ist. Das kann mittels zweierlei Ausführungsformen erfolgen, nämlich dadurch, dass die Schutzschildvorrichtung zur verfahrbaren, quasi direkten Montage an die Verfahrschiene ausgeführt ist, und ergänzend dadurch, dass eine zusätzliche Schutzschildvorrichtung zur Montage an einen entlang der Verfahrschiene verfahrbaren Roboter ausgeführt ist, um mit dem Roboter mit zu verfahren.

Die Erfindung schafft eine verfahrbare Schutzschildvorrichtung, für eine Verfahrschiene, entlang der zumindest ein Roboter mit einem Applikationsorgan (z. B. einem Zerstäuber) zum Applizieren eines Applikationsmittels (z. B. Lack) verfahrbar ist. Die Schutzschildvorrichtung umfasst zweckmäßig zumindest ein Schutzschild zum Schützen der Verfahrschiene vor dem durch das Applikationsorgan abgegebenen Applikationsmittel.

Das Schutzschild dient als Schutz, insbesondere Abschirmung, für die Verfahrschiene vor Overspray und/oder vor direkter Besprühung mit Applikationsmittel während eines Applikationsprozesses.

Die Erfindung umfasst insbesondere zwei sich ergänzende Ausführungsformen. Eine erste Ausführungsform, in der die Schutzschildvorrichtung zur Montage an die Verfahrschiene ausgeführt ist, und eine zweite Ausführungsform, in der eine zusätzliche Schutzschildvorrichtung zur Montage an zumindest einen Roboter ausgeführt ist.

Nachfolgend wird zunächst die erste Ausführungsform beschrieben.

Die Schutzschildvorrichtung umfasst zumindest eine Montageeinrichtung (Führungswagen), die zur verfahrbaren, zweckmäßig direkten Montage an der Verfahrschiene ausgeführt ist.

Die Schutzschildvorrichtung selbst ist antriebslos ausgebildet und weist somit insbesondere keinen Antriebsmotor, keine Antriebseinheit, etc. auf, sondern ist vielmehr durch den zumindest einen Roboter mittels zweckmäßigen Antriebskontakten, insbesondere mittels Verschieben verfahrbar (z.B. verschiebbar, verschubsbar, etc.). Der zumindest eine Roboter kann somit zweckmäßig als Antriebsvorrichtung für die Schutzschildvorrichtung dienen.

Die Schutzschildvorrichtung ist ausgeführt, um mittels des zumindest einen Roboters durch insbesondere temporäre Antriebskontakte, z. B. hin- und hergeschubst, hin- und hergeschoben, hin- und herpositioniert zu werden. Das kann quasi ziellos (z. B. willkürlich oder zufallsbedingt) erfolgen. Es ist aber ebenso möglich, dass der zumindest eine Roboter so konfiguriert ist, dass er die Schutzschildvorrichtung zu vordefinierten Positionen entlang der Verfahrschiene verfahren kann.

Die Schutzschildvorrichtung ist zur freien Verfahrbarkeit entlang der Verfahrschiene ausgeführt, z. B. zum Hin- und Herverschieben, zum Hin- und Herschubsen oder zum Hin- und Herpositionieren mittels des zumindest einen Roboters.

Die Schutzschildvorrichtung ist folglich zweckmäßig nicht zur stationären, ortskonstanten Montage an die Verfahrschiene und nicht zur verschiebefesten Montage an den zumindest einen Roboter ausgeführt.

Das Merkmal "Antriebskontakte" ist breit auszulegen und umfasst insbesondere temporäre Antriebskontakte zwischen der Schutzschildvorrichtung und dem zumindest einen Roboter. Die Antriebskontakte können z. B. als, Schiebe-, Stoß- und/oder Schubskontakte ausgeführt sein. Die Antriebskontakte können als relativ kurze Stoßkontakte oder relative lange Schiebekontakte ausgeführt werden.

Bei einer besonders bevorzugten Ausführungsform ist die Schutzschildvorrichtung frei verfahrbar zwischen zwei Robotern an der Verfahrschiene montiert, um von den Robotern während eines Applikationsprozesses durch Verschieben entlang der Verfahrschiene verfahren (z.B. positioniert, verschoben, etc.) zu werden.

Die Schutzschildvorrichtung und/oder der Roboter sind vorzugsweise mit einer zweckmäßig mitfahrenden Pufferung (z. B. einem oder mehreren Dämpfungselementen) versehen, mittels der die Antriebskontakte zwischen der Schutzschildvorrichtung und dem Roboter zumindest geringfügig gepuffert, z. B. gedämpft oder abgeschwächt, werden können. Als Pufferung kann z.B. zumindest ein Kunststoffelement verwendet werden. Die Pufferung kann einseitig oder zweiseitig seitlich an der Schutzschildvorrichtung und/oder dem Roboter ausgebildet sein.

Es ist möglich, dass die Schutzschildvorrichtung mit zumindest einer Abgabeeinheit zur Abgabe eines Schmiermittels (z. B. Fett) auf die Verfahrschiene ausgestattet ist. Trotz der erfindungsgemäßen Schutzschildvorrichtung kann es unter Umständen vorkommen, dass die Verfahrschiene während eines Applikationsprozesses abschnittsweise so frei liegt, dass die Gefahr besteht, dass das Applikationsmittel, z. B. in Form von Overspray, auf Teile der Verfahrschiene gelangt. Das Schmiermittel verhindert oder reduziert zumindest die Anhaftung des Applikationsmittels auf der Verfahrschiene.

Die Abgabeeinheit ist vorzugsweise mit einer Schmiermitteleinrichtung verbunden, die als Behälter für das Schmiermittel dient und zur Beaufschlagung des Schmiermittels zu der Abgabeeinheit ausgeführt ist.

Die Abgabeeinheit ist vorzugsweise an der Montageeinrichtung montiert, um das Schmiermittel auf die Verfahrschiene abgeben zu können.

Die Abgabeeinheit und die Schmiermitteleinrichtung sind zweckmäßig als sogenannte Langzeitschmiereinheit ausgeführt.

Es ist möglich, dass die Schutzschildvorrichtung eine Tragstruktur umfasst. Die Tragstruktur dient dazu, zumindest eines von folgenden zu tragen: das Schutzschild, die zumindest eine Montageeinrichtung, die zumindest eine Abgabeeinheit, die zumindest eine Schmiermitteleinrichtung und/oder die Pufferung. Die Tragstruktur kann z. B. platten- oder rahmenförmig, insbesondere gitterrahmenförmig, ausgeführt sein.

Die zweite Ausführungsform betrifft, wie oben bereits erwähnt, eine zusätzliche Schutzschildvorrichtung, die zur zweckmäßig verschiebefesten Montage an einen Roboter ausgeführt ist und hierzu zumindest eine geeignete Montageeinrichtung aufweist. Dadurch, dass die zusätzliche Schutzschildvorrichtung zur Montage an den Roboter ausgeführt ist, kann sie zusammen mit dem Roboter entlang der Verfahrschiene verfahren werden.

Der Roboter umfasst vorzugsweise eine Montagebasis, vorzugsweise mit einer oder mehreren Montageeinrichtungen (z. B. Führungswägen), zur verfahrbaren Montage an die Verfahrschiene.

Die Schutzschildvorrichtung ist vorzugsweise zur Montage an der Montagebasis des Roboters ausgeführt.

Es ist möglich, dass das Schutzschild zur Positionierung seitlich neben den Roboter, insbesondere seitlich neben dessen Montagebasis, ausgeführt ist. Es ist möglich, dass die Schutzschildvorrichtung zwei Schutzschilde umfasst, zur zweiseitigen seitlichen Positionierung neben den Roboter, insbesondere dessen Montagebasis.

Das zumindest eine Schutzschild dient dadurch vorzugsweise nicht nur zum Schutz der Verfahrschiene vor dem durch das Applikationsorgan abgegebenen Applikationsmittel, sondern ebenso zum Schutz des Roboters, insbesondere dessen Montagebasis.

Das Schutzschild nach der ersten Ausführungsform und/oder der zweiten Ausführungsform ist zweckmäßig so ausgeführt, dass es die Verfahrschiene in Höhen- oder Vertikalrichtung überspannt. Das Schutzschild kann vorzugsweise oben und/oder unten mit einem zur Verfahrschiene hin verformten (z. B. gebogenen oder geknickten) Flanschabschnitt versehen sein.

Das Schutzschild hat vorzugsweise eine Materialstärke von kleiner 5mm, kleiner 4mm, kleiner 3mm oder sogar kleiner 2mm und kann z. B. ein Blech- oder Kunststoffteil sein.

Zu erwähnen ist, dass das Schutzschild plattenförmig und/oder flächig ausgeführt ist (z. B. mit einer Materialstärke von kleiner 16mm, 14mm, 12mm, 10mm, 6mm, 4mm oder 2mm) .

Das plattenförmige und/oder flächige Schutzschild kann im Rahmen der Erfindung zweckmäßig steif oder im Wesentlichen starr, also allenfalls geringfügig elastisch sein.

Das Schutzschild ist vorzugsweise in seiner Gesamtheit verfahrbar. Alternativ oder ergänzend umfasst die Schutzschildvorrichtung und/oder das Schutzschild insbesondere keine ortsfeste Montagestelle.

Das Schutzschild weist zweckmäßig eine im Wesentlichen flächige Schutzoberfläche auf.

Das Schutzschild kann steif oder im Wesentlichen starr ausgeführt sein, dabei zweckmäßig aber durchaus eine gewisse Elastizität aufweisen.

Das Schutzschild ist insbesondere nicht balgförmig, insbesondere nicht faltenbalgförmig.

Das Schutzschild ist also nicht ziehharmonikaförmig ein- und ausfahrbar.

Das Schutzschild ist insbesondere zur nicht-allseitigen Ummantelung der Verfahrschiene ausgeführt, z. B. zur maximal dreiseitigen Abschirmung (insbesondere vorne und optional oben und/oder unten).

Das Schutzschild ist vorzugsweise ausgeführt, um sich nur partiell entlang des vom Schutzschild zu schützenden Bereichs der Verfahrschiene zu erstrecken, so dass zumindest ein anderer, von dem Schutzschild zu schützender Bereich der Verfahrschiene Schutzschild-frei bleibt. Der von dem Schutzschild zu schützende Bereich der Verfahrschiene ist üblicherweise länger als die Breite des Schutzschilds. Mittels der Verfahrbarkeit kann das Schutzschild dennoch zweckmäßig den gesamten, von ihm zu schützenden Bereich erreichen und somit schützen.

Die Erfindung ist nicht auf eine Schutzschildvorrichtung beschränkt, sondern umfasst auch zumindest einen Roboter, vorzugsweise einen Lackierroboter, und zumindest eine Schutzschildvorrichtung, wie hierin beschrieben.

Darüber hinaus umfasst die Erfindung eine Verfahrschiene (Verfahrachse) mit zumindest einem Roboter, vorzugsweise einem Lackierroboter, und zumindest einer Schutzschildvorrichtung, wie hierin beschrieben. Insbesondere ist zumindest ein ein Applikationsorgan aufweisender Roboter entlang der Verfahrschiene verfahrbar montiert. Vorzugsweise sind allerdings zumindest zwei Roboter entlang der Verfahrschiene verfahrbar montiert.

Es ist möglich, dass an der Verfahrschiene zumindest zwei Roboter und eine Schutzschildvorrichtung (zweckmäßig gemäß der zuvor erwähnten ersten Ausführungsform) montiert sind und die Schutzschildvorrichtung zwischen den zwei Robotern angeordnet ist, um von den Robotern entlang der Verfahrschiene mittels Antriebskontakten verfahren zu werden, insbesondere hin- und herverschoben, hin- und hergeschubst oder hin- und herpositioniert zu werden.

Es ist ergänzend möglich, dass an der Verfahrschiene zumindest zwei Roboter angeordnet sind und an zumindest einem der Roboter eine mit dem Roboter mitverfahrbare Schutzschildvorrichtung (zweckmäßig gemäß der zuvor erwähnten zweiten Ausführungsform) montiert ist. An den zwei Robotern ist vorzugsweise jeweils eine Schutzschildvorrichtung montiert, um zusammen mit dem jeweiligen Roboter mitzuverfahren.

Das Applikationsorgan dient zweckmäßig zur Applikation eines Applikationsmittels, vorzugsweise auf Kraftfahrzeugkarosserien und/oder Anbauteile hierfür.

Das Applikationsorgan ist vorzugsweise ein Zerstäuber (z. B. ein Rotationszerstäuber).

Das Applikationsmittel ist vorzugsweise Lack.

Der zumindest eine Roboter ist folglich vorzugsweise ein Lackierroboter.

Der zumindest eine Roboter ist vorzugsweise ein Mehrachsroboter, z. B. mit zumindest 4, 5 oder 6 Bewegungsachsen, zusätzlich zu der mittels der Verfahrschiene zur Verfügung gestellten Bewegungsachse.

Der Roboter hat zweckmäßig eine Antriebseinheit. Die Antriebseinheit dient dazu, den Roboter entlang der Verfahrschiene zu verfahren.

Die Erfindung findet insbesondere Anwendung in einer Lackieranlage zur Lackierung von Kraftfahrzeugkarosserien und/oder Anbauteilen hierfür.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Ansicht einer Verfahrschiene mit zwei Robotern und einer Schutzschildvorrichtung gemäß einer Ausführungsform der Erfindung,
- Figur 2: zeigt eine vergrößerte Ansicht der Roboter und der Schutzschildvorrichtung aus Figur 1,
- Figur 3: zeigt eine perspektivische Ansicht der Schutzschildvorrichtung aus den Figuren 1 und 2,
- Figur 4: zeigt eine perspektivische Rückansicht der Schutzschildvorrichtung der Figuren 1 bis 3 mit abgenommenen Schutzschild,
- Figur 5: zeigt eine perspektivische Vorderansicht der Schutzschildvorrichtung der Figuren 1 bis 4,
- Figur 6: zeigt eine Verfahrschiene mit zwei Robotern und mehreren Schutzschildvorrichtungen gemäß einer Ausführungsform der Erfindung,
- Figur 7: zeigt eine vergrößerte Ansicht der Roboter nebst Schutzschildvorrichtungen aus der Figur 6,
- Figur 8: zeigt eine perspektivische Rückansicht der Roboter nebst Schutzschildvorrichtungen aus den Figuren 6 und 7, und
- Figur 9: zeigt eine vergrößerte perspektivische Rückansicht eines Roboters nebst Schutzschildvorrichtung aus den Figuren 6 bis 8.

Die in den Figuren gezeigten Ausführungsformen stimmen teilweise überein, wobei identische oder zumindest ähnliche Teile mit den gleichen Bezugszeichen versehen sind, und zu deren Erläuterung auch auf die Beschreibung der anderen Ausführungsform verwiesen wird, um Wiederholungen zu vermeiden.

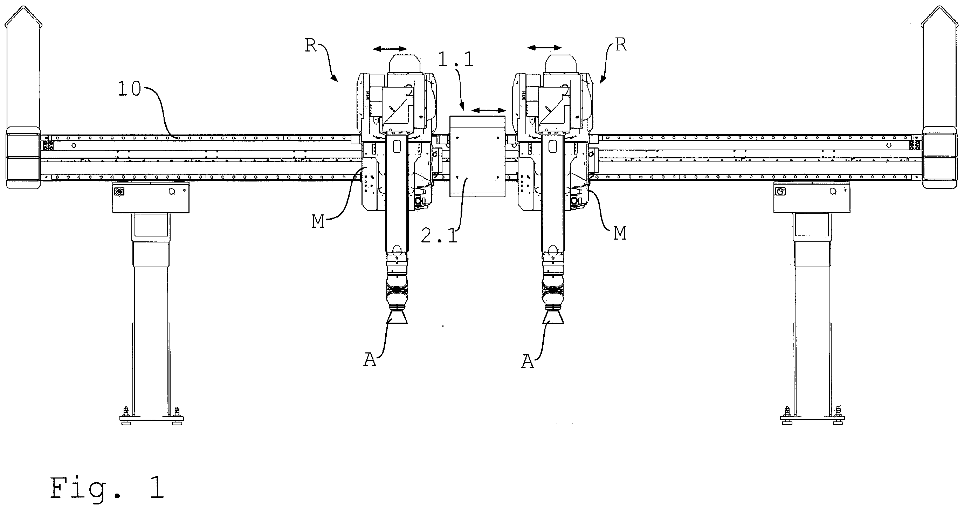

Figur 1 zeigt eine Verfahrschiene (Roboterverfahrachse) 10 mit zwei vorzugsweise baugleichen Robotern R, die entlang der Verfahrschiene 10 verfahrbar sind, was in Figur 1 schematisch durch zwei Doppelpfeile angedeutet ist. Die Verfahrschiene 10 ist auf Stützen gelagert, kann alternativ allerdings ebenso an einer Kabinenwand, insbesondere einer Lackierkabinenwand montiert werden.

Die Roboter R weisen jeweils ein Applikationsorgan A zum Applizieren eines Applikationsmittels auf. Das Applikationsorgan A ist als schematisch dargestellter Zerstäuber A ausgeführt. Das Applikationsmittel ist Lack. Die Zerstäuber A dienen insbesondere zur Beschichtung nicht gezeigter Kraftfahrzeugkarosserien und/oder Anbauteile hierfür.

Die Roboter R sind als Mehrachsroboter mit vorzugsweise 6 Bewegungsachsen ausgeführt, zusätzlich zu der durch die Verfahrschiene 10 zur Verfügung gestellte Bewegungsachse.

Die Roboter R umfassen eine Montagebasis M, mittels denen sie verfahrbar an der Verfahrschiene 10 montiert sind.

Figur 1 zeigt ferner eine Schutzschildvorrichtung 1.1 gemäß einer Ausführungsform der Erfindung. Die Schutzschildvorrichtung 1.1 ist zwischen den zwei Robotern R angeordnet und an der Verfahrschiene 10 frei verfahrbar montiert, was in Figur 1 schematisch durch den Doppelpfeil angedeutet ist. Die Schutzschildvorrichtung 1.1 umfasst ein Schutzschild 2.1, das zum Schutz der Verfahrschiene 10 vor dem durch die Zerstäuber A abgegebenen Lack dient. Die Schutzschildvorrichtung 1.1 dient folglich als Schutz, insbesondere Abschirmung, für die Verfahrschiene 10 vor Overspray und direkter Besprühung mit Lack während eines Lackierprozesses.

Das Schutzschild 2.1 ist zweckmäßig platten- und/oder flächenförmig ausgeführt.

Die Schutzschildvorrichtung 1.1 ist antriebslos und frei zwischen den Robotern R montiert, um von den Robotern R während des Lackierprozesses durch Verschieben, zweckmäßig mittels Antriebskontakten, entlang der Verfahrschiene 10 positioniert zu werden.

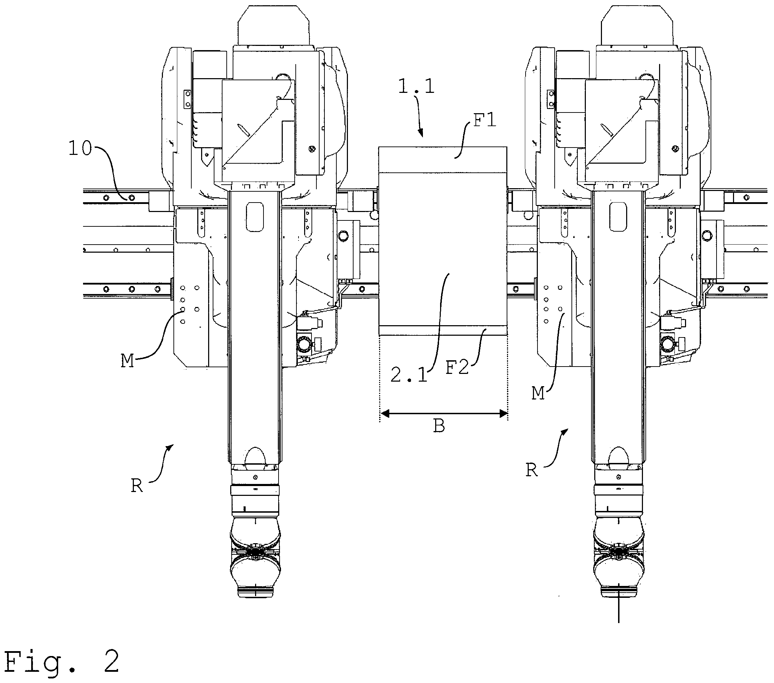

Figur 2 zeigt eine vergrößerte Ansicht der Roboter R und insbesondere der Schutzschildvorrichtung 1.1 der Figur 1.

Das Schutzschild 2.1 ist so ausgeführt, dass es die Verfahrschiene 10 in Höhen- oder Vertikalrichtung überspannt. Das Schutzschild 2.1 ist oben mit einem zur Verfahrschiene 10 hin verformten Flanschabschnitt F1 versehen und unten mit einem zur Verfahrschiene 10 hin verformten Flanschabschnitt F2 versehen.

Die Schutzschildvorrichtung 1.1 weist selbst keinen Antrieb, wie etwa einen Motor etc., auf. Die Schutzschildvorrichtung 1.1 ist mittels Antriebskontakten der Roboter R entlang der Verfahrschiene 10 verfahrbar, z. B. hin- und herverschiebbar oder hin- und herschubsbar. Dadurch können sogar Abschnitte der Verfahrschiene 10 vor Verschmutzung geschützt werden, zu denen die Roboter R selbst nicht verfahren werden.

Das Verschieben der Schutzschildvorrichtung 1.1 kann mehr oder minder ziellos erfolgen oder aber mittels geeigneter Steuerung zu vordefinierten Positionen entlang der Verfahrschiene 10.

Das Schutzschild 2.1 hat eine Breite B von vorzugsweise zwischen 200mm - 600mm, insbesondere von 400mm +/- 50mm.

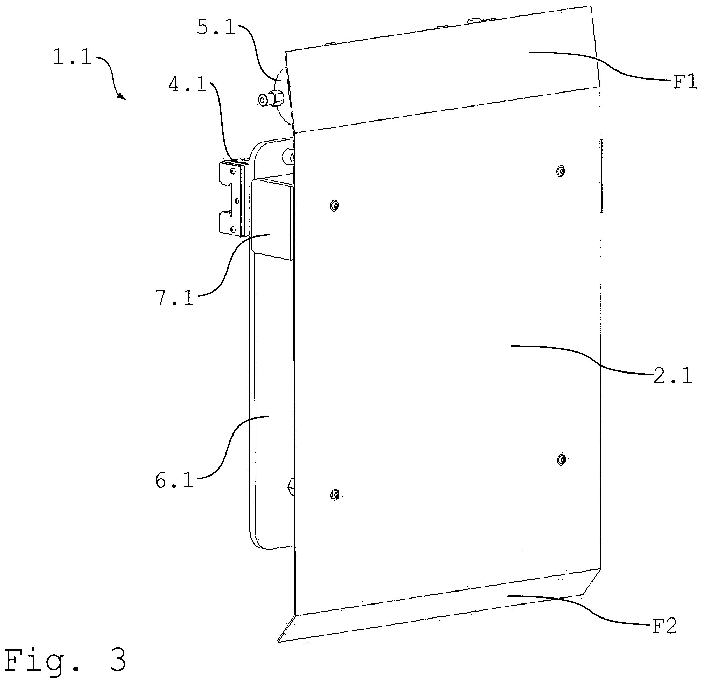

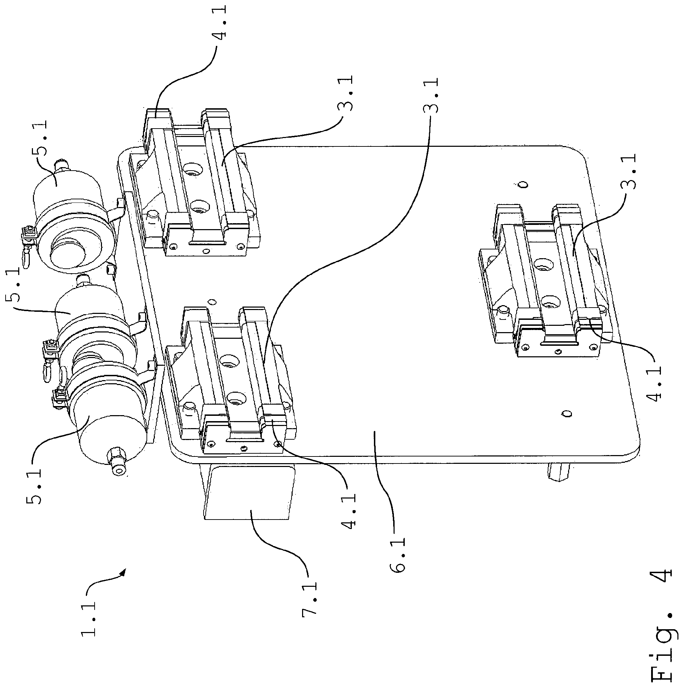

Figur 3 zeigt eine perspektivische Ansicht der Schutzschildvorrichtung 1.1 der Figuren 1 und 2. Figur 3 ist z. B. zu entnehmen, dass das Schutzschild 2.1 aus einem einfachen dünnwandigen Teil, z. B. einem Blech- oder Kunststoffteil, ausgebildet ist. Figur 3 ist ferner zu entnehmen, dass die Schutzschildvorrichtung 1.1 ein zu den Robotern R separates Funktionsteil ist. Figur 4 zeigt ferner teilweise eine Abgabeeinheit 4.1 zur Abgabe von Schmiermittel auf die Verfahrschiene 10, eine Schmiermitteleinrichtung 5.1, die das Schmiermittel aufnimmt und mittels einer Presseinrichtung zu der Abgabeeinheit 4.1 drückt, eine Tragstruktur 6.1 und eine

Pufferung 7.1, die allerdings erst nachfolgend näher beschrieben werden.

Figur 4 zeigt eine Rückansicht der Schutzschildvorrichtung 1.1 der Figuren 1 bis 3.

Figur 4 zeigt drei Montageeinrichtungen 3.1, insbesondere drei Führungswägen, die zur verfahrbaren Montage an die Verfahrschiene 10 ausgeführt sind. Die Montageeinrichtungen 3.1 sind jeweils mit einer Abgabeeinheit 4.1 zur Abgabe des Schmiermittels (z. B. Fett) auf die Verfahrschiene 10 ausgestattet. Die Abgabeeinheiten 4.1 stehen mit jeweils einer Schmiermitteleinrichtung 5.1 zur Beaufschlagung des Schmiermittels in Verbindung. Das Schmiermittel sorgt einerseits für eine reduzierte Reibung und andererseits dafür, dass Lack, sofern er trotz Schutzschildvorrichtung 1.1 auf die Verfahrschiene 10 gelangt, schlechter, bestenfalls gar nicht auf der Verfahrschiene 10 anhaftet.

Die Schutzschildvorrichtung 1.1 ist mit einer zweckmäßig elastischen Pufferung 7.1 (z. B. einem oder mehreren Dämpfungselementen) versehen. Die Pufferung 7.1 dient dazu, die Antriebskontakte, insbesondere Drück- und Stoßkontakte, der Roboter R auf die Schutzschildvorrichtung 1.1 zumindest geringfügig zu puffern.

Figur 4 zeigt ferner, dass die Schutzschildvorrichtung 1.1 eine zweckmäßig plattenförmige Tragstruktur 6.1 umfasst, die das Schutzschild 2.1, die Montageeinrichtungen 3.1 inklusive der Abgabeeinheiten 4.1, die Schmiermitteleinrichtungen 5.1 und die Pufferung 7.1 mittelbar oder unmittelbar trägt.

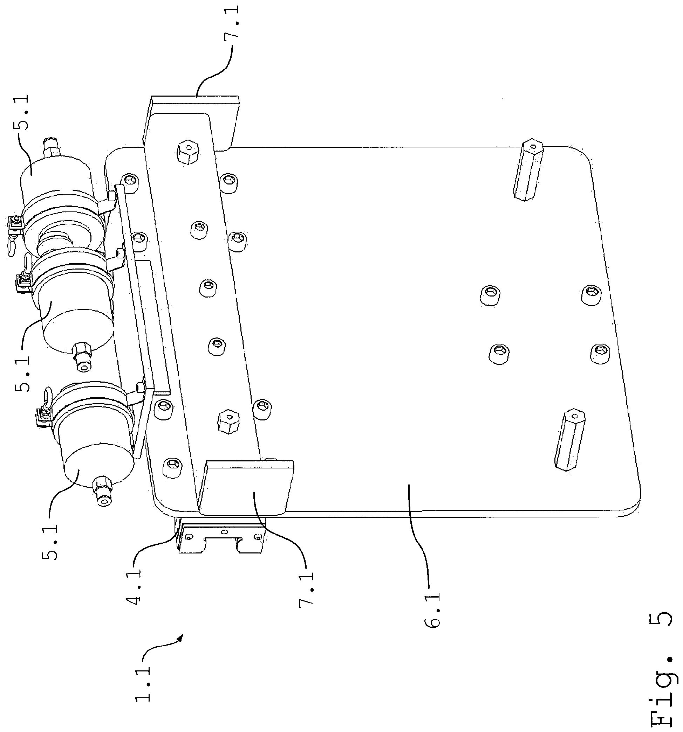

Figur 5 zeigt eine Vorderansicht der Schutzschildvorrichtung 1.1 der Figuren 1 bis 4, allerdings zu Darstellungszwecken mit abgenommenen Schutzschild 2.1.

Figur 5 ist z. B. zu entnehmen, dass die Pufferung 7.1 zweiseitig an der Schutzschildvorrichtung 1.1 ausgeführt ist und somit zwei Pufferelemente umfasst, so dass Antriebskontakte quasi von links und rechts gepuffert werden können.

Bei einer nicht gezeigten Ausführungsform der Erfindung kann die Schutzschildvorrichtung 1.1 über ein Seil oder ein anderes biegeschlaffes, zugkraftübertragenes Teil mit einem Roboter R verbunden sein. Dadurch ist es möglich, dass die Schutzschildvorrichtung 1.1 durch einen Roboter R bidirektional entlang der Verfahrschiene 10 verfahren werden kann, nämlich einerseits mit Drückkontakten und andererseits mit Zugkontakten.

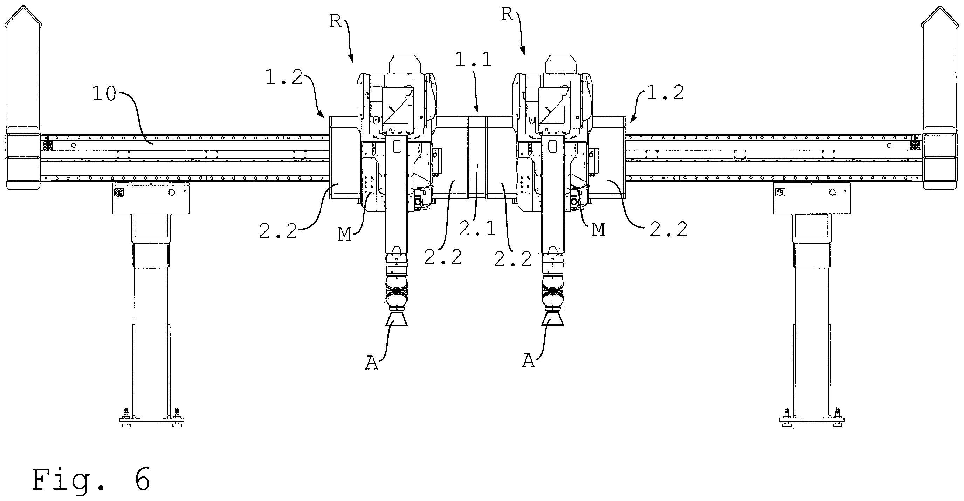

Figur 6 zeigt eine Verfahrschiene 10 mit zwei Robotern R und einer Schutzschildvorrichtung 1.1, wie unter Bezugnahme auf die Figuren 1 bis 5 beschrieben.

Eine Besonderheit der in Figur 6 gezeigten Ausführungsform ist, dass zusätzlich zu der Schutzschildvorrichtung 1.1, die Roboter R jeweils mit einer zusätzlichen Schutzschildvorrichtung 1.2 ausgestattet sind. Die Roboter R und die Schutzschildvorrichtungen 1.2 sind baugleich ausgeführt, so dass die nachfolgende Beschreibung sich auf nur einen Roboter R und nur eine Schutzschildvorrichtung 1.2 bezieht.

Die Schutzschildvorrichtung 1.2 ist an den Roboter R verschiebefest montiert, so dass sie zusammen mit dem Roboter R entlang der Verfahrschiene 10 verfahren wird, wenn der Roboter R entlang der Verfahrschiene 10 verfährt. Die Schutzschildvorrichtung 1.2 umfasst zwei Schutzschilde 2.2, die zweiseitig, quasi nach links und rechts, seitlich von dem Roboter R abstehen und zum Schutz der Verfahrschiene 10 vor dem durch den Zerstäuber A abgegebenen Lack dienen. Die Schutzschildvorrichtung 1.2 dient folglich als Schutz, insbesondere Abschirmung, für die Verfahrschiene 10 vor Overspray und direkter Besprühung mit Lack während eines Lackierprozesses.

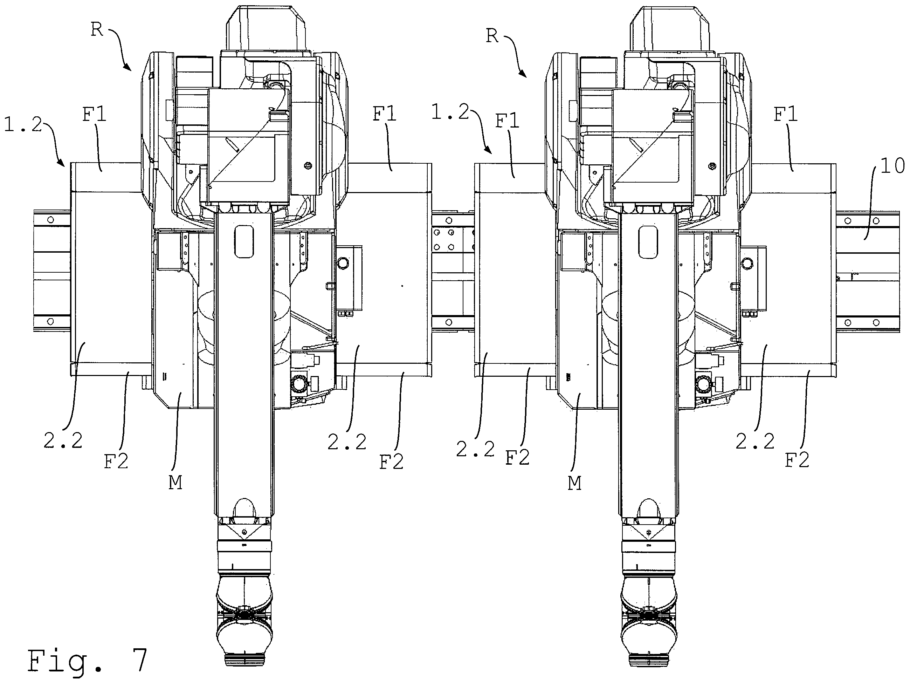

Figur 7 zeigt eine vergrößerte Ansicht der Roboter R und insbesondere der Schutzschildvorrichtungen 1.2 der Figur 6.

Die Schutzschilde 2.2 sind so ausgeführt, dass sie die Verfahrschiene 10 in Höhen- oder Vertikalrichtung überspannen. Die Schutzschilde 2.2 sind oben mit einem zur Verfahrschiene 10 hin verformten Flanschabschnitt F1 versehen und unten mit einem zur Verfahrschiene 10 hin verformten Flanschabschnitt F2 versehen.

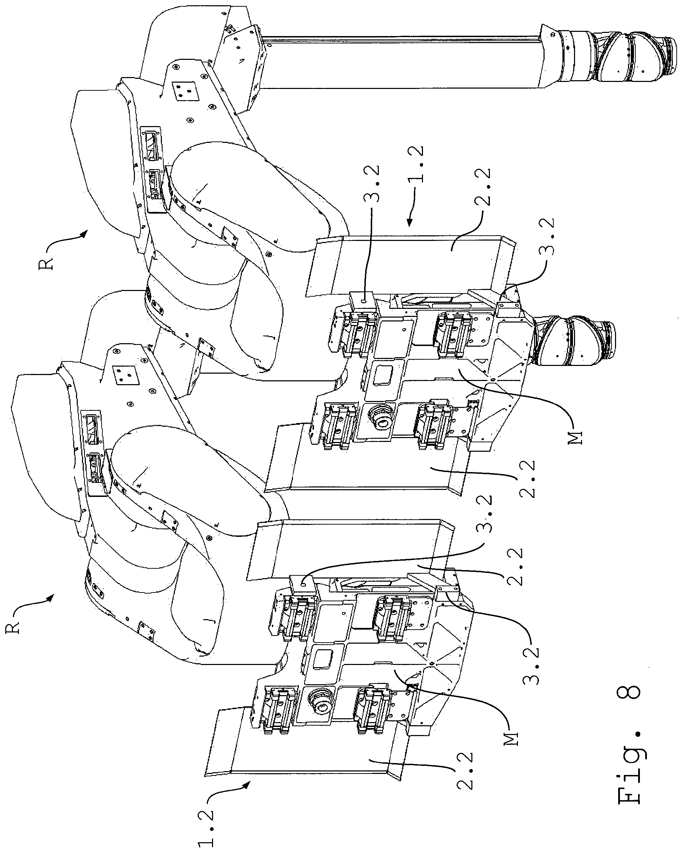

Figur 8 zeigt eine perspektivische Rückansicht der Roboter R und der Schutzschildvorrichtungen 1.2 aus den Figuren 6 und 7.

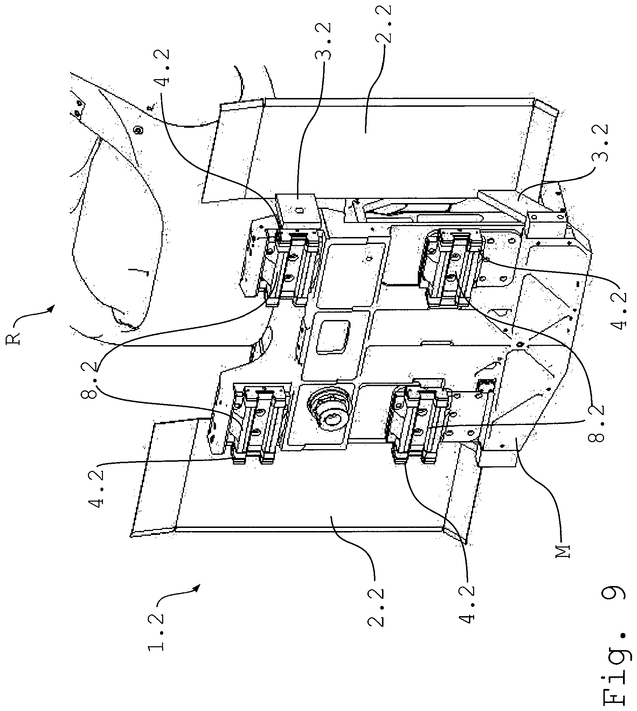

Figur 8 zeigt insbesondere die Montagebasis M zur verfahrbaren Montage des Roboters R an die Verfahrschiene 10. Die Montagebasis M wird unter Bezugnahme auf Figur 9 näher beschrieben.

Aus Figur 8 ergibt sich, dass die Schutzschildvorrichtung 1.2 nicht nur als Verschmutzungsschutz für die Verfahrschiene 10 dient, sondern auch als Verschmutzungsschutz für den Roboter R, insbesondere dessen Montagebasis M.

Figur 8 zeigt ferner die Montageeinrichtungen 3.2, mittels denen die Schutzschilde 2.2 an den Roboter R montiert sind.

Die Montageeinrichtungen 3.2 sind an die Montagebasis M montiert und als Flansch-Schraub-Verbindungen ausgeführt.

Figur 9 zeigt eine vergrößertere Ansicht der Montagebasis M und der Schutzschildvorrichtung 1.2 aus Figur 8.

Der Figur 9 ist vor allem zu entnehmen, dass die Montagebasis M mittels vier Montageeinrichtungen (Führungswägen) 8.2 an der Verfahrschiene 10 montierbar ist. Die Montageeinrichtungen 8.2 sind mit jeweils einer Abgabeeinheit 4.2 zur Abgabe von Schmiermittel auf die Verfahrschiene 10 ausgestattet. Die Abgabeeinheiten 4.2 können mit in der Figur 9 nicht zu sehenden Schmiermitteleinrichtungen zur Speicherung und Beaufschlagung des Schmiermittels in Verbindung stehen, ähnlich wie zuvor unter Bezugnahme auf die Schutzschildvorrichtung 1.1 beschrieben.

Zu erwähnen ist, dass auch die Schutzschildvorrichtung 1.2 und/oder der Roboter R mit einer seitlichen Pufferung versehen werden kann.

Zu erwähnen ist nochmals, dass die Erfindung insbesondere in einer Lackieranlage für Kraftfahrzeugkarosserien und/oder Anbauteilen hierfür einsetzbar ist.

### Bezugszeichenliste

- 1.1: Schutzschildvorrichtung
- 2.1: Schutzschild
- 3.1: Montageeinrichtung (Führungswagen) zur Montage an Verfahrschiene
- 4.1: Schmiermittel-Abgabeeinheit
- 5.1: Schmiermitteleinrichtung
- 6.1: Tragstruktur
- 7.1: Pufferung

- 1.2: Schutzschildvorrichtung
- 2.2: Schutzschild
- 3.2: Montageeinrichtung zur Montage an Roboter
- 4.2: Schmiermittel-Abgabeeinheit
- 8.2: Montageeinrichtung (Führungswagen) zur Montage an Verfahrschiene

- 10: Verfahrschiene/Verfahrachse
- R: Roboter
- M: Montagebasis
- A: Applikationsorgan

### Bezugszeichenliste

- 1.1: Schutzschildvorrichtung
- 2.1: Schutzschild
- 3.1: Montageeinrichtung (Führungswagen) zur Montage an Verfahrschiene
- 4.1: Schmiermittel-Abgabeeinheit
- 5.1: Schmiermitteleinrichtung
- 6.1: Tragstruktur
- 7.1: Pufferung

- 1.2: Schutzschildvorrichtung
- 2.2: Schutzschild
- 3.2: Montageeinrichtung zur Montage an Roboter
- 4.2: Schmiermittel-Abgabeeinheit
- 8.2: Montageeinrichtung (Führungswagen) zur Montage an Verfahrschiene

- 10: Verfahrschiene/Verfahrachse
- R: Roboter
- M: Montagebasis
- A: Applikationsorgan

## Patentansprüche

1. Verfahrbare Schutzschildvorrichtung (1.1) für eine Verfahrschiene (10), entlang der zumindest ein Roboter (R) mit einem Applikationsorgan (A) verfahrbar ist, wobei die Schutzschildvorrichtung (1.1) zumindest ein plattenförmig und/oder flächig ausgeführtes und steifes oder im Wesentlichen starres Schutzschild (2.1) zum Schutz der Verfahrschiene (10) vor dem durch das Applikationsorgan (A) abgegebenen Applikationsmittel umfasst, wobei die Schutzschildvorrichtung (1.1) selbst antriebslos ist und nicht zur verschiebefesten Montage an dem zumindest einen Roboter (R), sondern zur freien Verfahrbarkeit entlang der Verfahrschiene (10) ausgeführt ist.

2. Schutzschildvorrichtung (1.1) nach Anspruch 1, wobei die Schutzschildvorrichtung (1.1) zumindest eine Montageeinrichtung (3.1) zur verfahrbaren Montage an der Verfahrschiene (10) umfasst.

3. Schutzschildvorrichtung (1.1) nach einem der vorhergehenden Ansprüche, wobei die Schutzschildvorrichtung (1.1) ausgeführt ist, um mittels Antriebskontakten des Roboters (R) entlang der Verfahrschiene (10) verfahren zu werden.

4. Schutzschildvorrichtung (1.1) nach einem der vorhergehenden Ansprüche, wobei die Schutzschildvorrichtung (1.1) und/oder der Roboter (R) mit einer Pufferung (7.1) versehen ist, mittels der Antriebskontakte zwischen der Schutzschildvorrichtung (1.1) und dem Roboter (R) pufferbar sind.

5. Schutzschildvorrichtung (1.1) nach einem der vorhergehenden Ansprüche, mit zumindest einer Abgabeeinheit (4.1) zur Abgabe eines Schmiermittels auf die Verfahrschiene (10).

6. Schutzschildvorrichtung (1.1) nach Anspruch 5, wobei die Abgabeeinheit (4.1) mit einer Schmiermitteleinrichtung (5.1) zur Aufnahme und Beaufschlagung des Schmiermittels zu der Abgabeeinheit (4.1) verbunden ist.

7. Schutzschildvorrichtung (1.1) nach Anspruch 5 oder 6, wobei die Abgabeeinheit (4.1) an der Montageeinrichtung (3.1) angeordnet ist.

8. Schutzschildvorrichtung (1.1) nach einem der vorhergehenden Ansprüche, wobei die Schutzschildvorrichtung (1.1) eine Tragstruktur (6.1) umfasst, mittels der zumindest eines von Folgenden getragen wird:
- das Schutzschild (2.1)
- die Montageeinrichtung (3.1)
- die Abgabeeinheit (4.1)
- die Schmiermitteleinrichtung (5.1)
- die Pufferung (7.1).

9. Schutzschildvorrichtung (1.1) nach einem der vorhergehenden Ansprüche, wobei das Schutzschild (2.1) die Verfahrschiene (10) in Höhen- oder Vertikalrichtung überspannt.

10. Roboter (R), vorzugsweise Lackierroboter, mit zumindest einer Schutzschildvorrichtung (1.1) nach einem der vorhergehenden Ansprüche.

11. Verfahrschiene (10), mit zumindest einem Roboter (R), vorzugsweise einem Lackierroboter, der entlang der Verfahrschiene (10) verfahrbar ist und der ein Applikationsorgan (A) aufweist, und zumindest einer Schutzschildvorrichtung (1.1) nach einem der Ansprüche 1 bis 9.

12. Verfahrschiene (10) nach Anspruch 11, wobei an der Verfahrschiene (10) zumindest zwei Roboter (R) und eine Schutzschildvorrichtung (1.1) montiert sind und die Schutzschildvorrichtung (1.1) zwischen den zwei Robotern (R) angeordnet ist, um mittels den Robotern (R) durch Antriebskontakte entlang der Verfahrschiene (10) verfahren zu werden.

13. Verfahrschiene (10) nach Anspruch 11 oder 12, wobei an der Verfahrschiene (10) zwei Roboter (R) angeordnet sind und an zumindest einem der Roboter (R) eine mit dem Roboter (R) mitverfahrbare zusätzliche Schutzschildvorrichtung (1.2) montiert ist.

14. Verfahrschiene (10) nach Anspruch 13, wobei die mitverfahrbare Schutzschildvorrichtung (1.2) zumindest eine Montageeinrichtung (3.2) zur Montage an den Roboter (R) aufweist, um gemeinsam mit dem Roboter (R) entlang der Verfahrschiene (10) verfahren zu werden, und/oder ein Schutzschild (2.2) zur Positionierung seitlich neben den Roboter (R) ausgeführt ist.

## Claims

1. Movable protective shield device (1.1) for a traversing rail (10) along which at least one robot (R) with an application member (A) can be moved, the protective shield device (1.1) comprising at least one plate-shaped and/or flat and stiff or essentially rigid protective shield (2.1) for protecting the traversing rail (10) from the application medium delivered by the application member (A), wherein the protective shield device (1.1) itself is without drive and is not designed for mounting on the at least one robot (R) so as to be fixed against displacement, but for free displaceability along the traversing rail (10).

2. Protective shield device (1.1) according to claim 1, wherein the protective shield device (1.1) comprises at least one mounting device (3.1) for movable mounting on the traversing rail (10).

3. Protective shield device (1.1) according to one of the preceding claims, wherein the protective shield device (1.1) is designed to be moved along the traversing rail (10) by means of drive contacts of the robot (R).

4. Protective shield device (1.1) according to one of the preceding claims, wherein the protective shield device (1.1) and/or the robot (R) is provided with a buffering (7.1) by means of which drive contacts between the protective shield device (1.1) and the robot (R) can be buffered.

5. Protective shield device (1.1) according to one of the preceding claims, with at least one dispensing unit (4.1) for dispensing a lubricant onto the traversing rail (10).

6. Protective shield device (1.1) according to claim 5, wherein the dispensing unit (4.1) is connected to a lubricant device (5.1) for receiving and supplying the lubricant to the dispensing unit (4.1).

7. Protective shield device (1.1) according to claim 5 or 6, wherein the dispensing unit (4.1) is arranged on the mounting device (3.1).

8. Protective shield device (1.1) according to one of the preceding claims, wherein the protective shield device (1.1) comprises a supporting structure (6.1) by means of which at least one of the following is supported:
- the protective shield (2.1)
- the mounting device (3.1)
- the dispensing unit (4.1)
- the lubricant device (5.1)
- the buffering (7.1).

9. Protective shield device (1.1) according to one of the preceding claims, wherein the protective shield (2.1) spans the traversing rail (10) in height or vertical direction.

10. Robot (R), preferably painting robot, with at least one protective shield device (1.1) according to one of the preceding claims.

11. Traversing rail (10), with at least one robot (R), preferably a painting robot, which can be traversed along the traversing rail (10) and which has an application member (A), and at least one protective shield device (1.1) according to one of claims 1 to 9.

12. Traversing rail (10) according to claim 11, wherein at least two robots (R) and a protective shield device (1.1) are mounted on the traversing rail (10) and the protective shield device (1.1) is arranged between the two robots (R) in order to be traversed along the traversing rail (10) by means of the robots (R) by drive contacts.

13. Traversing rail (10) according to claim 11 or 12, wherein two robots (R) are arranged on the traversing rail (10) and an additional protective shield device (1.2) is mounted on at least one of the robots (R), which can be moved together with the robot (R),

14. Traversing rail (10) according to claim 13, wherein the additional movable protective shield device (1.2) has at least one mounting device (3.2) for mounting on the robot (R) in order to be moved along the traversing rail (10) together with the robot (R), and/or a protective shield (2.2) is provided for positioning laterally next to the robot (R).

## Revendications

1. Dispositif de bouclier protecteur (1.1) mobile pour une glissière (10) le long de laquelle au moins un robot (R) doté d'un organe d'application (A) peut se déplacer, le dispositif de bouclier protecteur (1.1) comprenant au moins un bouclier protecteur (2.1) réalisé en forme de plaque et/ou à plat et raide ou essentiellement rigide pour la protection de la glissière (10) contre le produit d'application délivré par l'organe d'application (A), le dispositif de bouclier protecteur (1.1) étant lui-même dépourvu d'entraînement et étant réalisé non pas pour le montage bloqué en déplacement sur l'au moins un robot (R) mais pour une mobilité libre le long de la glissière (10).

2. Dispositif de bouclier protecteur (1.1) selon la revendication 1, le dispositif de bouclier protecteur (1.1) comprenant au moins un équipement de montage (3.1) pour le montage mobile sur la glissière (10).

3. Dispositif de bouclier protecteur (1.1) selon l'une des revendications précédentes, le dispositif de bouclier protecteur (1.1) étant réalisé pour être déplacé le long de la glissière (10) au moyen de contacts d'entraînement du robot (R).

4. Dispositif de bouclier protecteur (1.1) selon l'une des revendications précédentes, le dispositif de bouclier protecteur (1.1) et/ou le robot (R) étant muni d'un dispositif amortisseur (7.1) au moyen duquel des contacts d'entraînement entre le dispositif de bouclier protecteur (1.1) et le robot (R) peuvent être amortis.

5. Dispositif de bouclier protecteur (1.1) selon l'une des revendications précédentes, avec au moins une unité de distribution (4.1) pour la distribution d'un lubrifiant sur la glissière (10).

6. Dispositif de bouclier protecteur (1.1) selon la revendication 5, l'unité de distribution (4.1) étant raccordée à un équipement de lubrifiant (5.1) destiné à la réception et à la délivrance du lubrifiant à l'unité de distribution (4.1).

7. Dispositif de bouclier protecteur (1.1) selon la revendication 5 ou 6, l'unité de distribution (4.1) étant disposée sur l'équipement de montage (3.1).

8. Dispositif de bouclier protecteur (1.1) selon l'une des revendications précédentes, le dispositif de bouclier protecteur (1.1) comprenant une structure porteuse (6.1) au moyen de laquelle au moins un des éléments suivants est supporté :
- le bouclier protecteur (2.1)
- l'équipement de montage (3.1)
- l'unité de distribution (4.1)
- l'équipement de lubrifiant (5.1)
- le dispositif amortisseur (7.1).

9. Dispositif de bouclier protecteur (1.1) selon l'une des revendications précédentes, le bouclier protecteur (2.1) enjambant la glissière (10) dans la direction en hauteur ou verticale.

10. Robot (R), de préférence robot de peinture, avec au moins un dispositif de bouclier protecteur (1.1) selon l'une des revendications précédentes.

11. Glissière (10), avec au moins un robot (R), de préférence un robot de peinture, qui peut se déplacer le long de la glissière (10) et qui comporte un organe d'application (A), et avec au moins un dispositif de bouclier protecteur (1.1) selon l'une des revendications 1 à 9.

12. Glissière (10) selon la revendication 11, au moins deux robots (R) et un dispositif de bouclier protecteur (1.1) étant montés sur la glissière (10), et le dispositif de bouclier protecteur (1.1) étant disposé entre les deux robots (R) pour être déplacé au moyen des robots (R) par des contacts d'entraînement le long de la glissière (10).

13. Glissière (10) selon la revendication 11 ou 12, deux robots (R) étant disposés sur la glissière (10), et un dispositif de bouclier protecteur (1.2) supplémentaire qui peut se déplacer conjointement avec le robot (R) étant monté sur au moins un des robots (R).

14. Glissière (10) selon la revendication 13, le dispositif de bouclier protecteur (1.2) qui peut se déplacer conjointement comportant au moins un équipement de montage (3.2) pour le montage sur le robot (R) afin d'être déplacé en même temps que le robot (R) le long de la glissière (10), et/ou un bouclier protecteur (2.2) étant réalisé pour le positionnement latéralement près du robot (R).
